# EUROPEAN PATENT APPLICATION

(11) **EP 4 624 325 A1**
(43) Date of publication of application: **01.10.2025**
(21) Application number: 24305464.0
(22) Date of filing: 27.03.2024
(51) Int. Cl.: B64C 11/38, B64C 11/40, B64C 11/30

(54) **PITCH CONTROL SYSTEM**

(71) Applicant: Ratier-Figeac SAS, 46101 Figeac Cedex (FR)
(72) Inventor: Seminel, Bruno, 46101 Figeac Cedex (FR)
(74) Representative: Dehns

(57) **Abstract**

A pitch control system comprising: a coarse pitch pressure circuit (102a) configured to receive a pressurised fluid; a pitchlock mechanism (128) configured to pitchlock a propeller blade of a propeller; and a controller (106) configured to detect undesired feathering of a propeller blade; wherein the controller is configured to, in response to detecting undesired feathering of the propeller blade, reduce the pressure of the pressurised fluid received by the coarse pitch pressure circuit so as to stop the propeller blade feathering and simultaneously cause the pitchlock mechanism to pitchlock the propeller blade.

## Description

This disclosure relates to a pitch control system for a propeller.

### BACKGROUND

Aircraft typically comprise a propeller coupled to a powerplant, i.e. a multi-engine system. In the case of electric propulsion, the powerplant may include two or more electric engines each coupled to a gearbox of the propeller, which sums the torques or speeds of the engines to drive the propeller. In the case of hybrid electric propulsion, the powerplant may include at least one thermal engine and one or more electric engines each coupled to the propeller gearbox.

Pitch control systems allow the pitch of the propeller blades to be adjusted to optimize propulsion efficiency based on actual thrust demand and flight conditions. However, faults in the system can cause the pitch of the propeller blades to vary undesirably. For example, uncontrolled pitch reduction can lead to an increase in drag on the propellers and/or risk overspeed of the propellers, impacting the safety of an aircraft. One solution is to incorporate a pitchlock mechanism that prevents the pitch of the propeller blades from decreasing in the case that there is a failure with the pitch control system. Another solution is to locate counterweights on the propeller blades that generate a torque about a centerline of the propeller blades, forcing the propeller blades to feather in case of a hydraulic supply loss. Feathering here refers to an increase in a pitch of the propeller blades.

Sometimes it is desirable to command feathering, for example, when there is a propeller failure (e.g. during aircraft take-off). This may be achieved using an auto-feather function that monitors a propeller torque or propeller speed and triggers feathering in the event of in-flight engine shut down. Multi-engine aircraft are usually designed to safely complete flight with one less powerplant regardless of the flight phase at the time of the engine shut down or loss.

However, for configurations in which two or more engines drive a single propeller, during some operating conditions, for example, aircraft take-off, it may be beneficial to take credit for the ability to maintain a level of traction in the powerplant of the aircraft in the event of a partial engine failure (i.e. when only one engine fails in the powerplant and the other engine(s) can maintain the capacity of the powerplant to drive the propeller) to avoid oversizing the other powerplant(s).

Existing propellers have single propeller failure modes that lead to unwanted propeller feathering which can become critical in the case that other powerplants cannot compensate for the resultant total loss of thrust. It is therefore desirable to improve pitch control systems, and in particular, provide a means of preventing undesirable feathering during specific operating conditions of an aircraft, such as, during take-off.

### SUMMARY

According to a first aspect, there is provided a pitch control system comprising: at least a coarse pitch pressure circuit configured to receive a pressurised fluid; a pitchlock mechanism configured to pitchlock a propeller blade of a propeller; and a controller configured to detect undesired feathering of the propeller blade; wherein the controller is configured to, in response to detecting undesired feathering of the propeller blade, reduce the pressure of the pressurised fluid received by the coarse pitch pressure circuit so as to stop the propeller blade feathering and simultaneously cause the pitchlock mechanism to pitchlock the propeller blade.

The pitch control system may comprise a fine pitch pressure circuit configured to receive a pressurised fluid.

The pressure of the pressurised fluid received by the coarse pitch pressure circuit and the fine pitch pressure circuit may determine a propeller blade pitch.

The pitch control system may comprise a pitchlock pressure circuit configured to receive a pressurised fluid.

The controller may be configured to pitchlock the propeller blade by reducing the pressure of the pressurised fluid received by the pitchlock pressure circuit.

The pressure of the pressurised fluid received by each of the coarse pitch pressure circuit, the fine pitch pressure circuit, and/or the pitchlock pressure circuit may be different.

The pitch control system may comprise one or more pumps configured to supply the pressurised fluid to each of the coarse pitch pressure circuit, the fine pitch pressure circuit, and/or the pitchlock pressure circuit. At least one of the one or more pumps may be a hydraulic pump.

The pitch control system may comprise an anti-feathering valve. The controller may be configured to reduce the pressure of the pressurised fluid received by the coarse pitch pressure circuit and the pitchlock pressure circuit by operating the anti-feathering valve to port the pressurised fluid to a drain.

The pitch control system may comprise a pitchlock valve. The controller may be configured to reduce the pressure of the pressurised fluid received by the coarse pitch pressure circuit and the pitchlock pressure circuit by operating the pitchlock valve to port the pressurised fluid to a drain.

The controller may be configured to reduce the pressure of the pressurised fluid received by the coarse pitch pressure circuit by operating the anti-feathering valve to port the pressurised fluid to a drain and reduce the pressure of the pressurised fluid received by the pitchlock pressure circuit by operating the pitchlock valve to port the pressurised fluid to a drain.

The control may be configured to reduce the pressure of the pressurised fluid received by the fine pitch pressure circuit.

The controller may be configured to reduce the pressure of the pressurised fluid received by the fine pitch pressure circuit by operating the anti-feathering valve to port the pressurised fluid to a drain.

The controller may be configured to reduce the pressure of the pressurised fluid received by the coarse pitch pressure circuit to a first threshold pressure.

The first threshold pressure may be a pressure value that will not allow a pitch of the propeller blade to increase.

The controller may be configured to detect undesired feathering of the propeller blade by determining whether the propeller blade pitch is above a pitch threshold value.

The controller may be configured to detect undesired feathering of the propeller blade by determining whether a rotation rate of the propeller is below a rotation rate threshold value.

The controller may be configured to detect undesired feathering of the propeller blade by determining whether a torque on the propeller is above a commanded torque.

The controller may be configured to allow automatic feathering of the propeller blade when the torque on the propeller is below a torque threshold value.

The controller may be configured to prevent automatic feathering of the propeller blade when the torque on the propeller is below the commanded torque but above the torque threshold value.

The torque threshold value may be less than the commanded torque.

According to a second aspect there is provided a propeller comprising at least one propeller blade and a pitch control system as described above.

According to a third aspect, there is provided a method of operating a pitch control system having a coarse pitch pressure circuit configured to receive a pressurised fluid and a pitchlock mechanism configured to pitchlock a propeller blade of a propeller, the method comprising: detecting undesired feathering of the propeller blade; and in response to detecting undesired feathering of the propeller blade, simultaneously reducing the pressure of the pressurised fluid received by the coarse pitch pressure circuit so as to stop the propeller blade feathering and simultaneously causing the pitchlock mechanism to pitchlock the propeller blade.

Embodiments will be further described and explained by way of example with reference to the accompanying drawings in which
Figure 1 shows a schematic of a pitch control system; and
Figure 2 shows a schematic of a pitch control system.

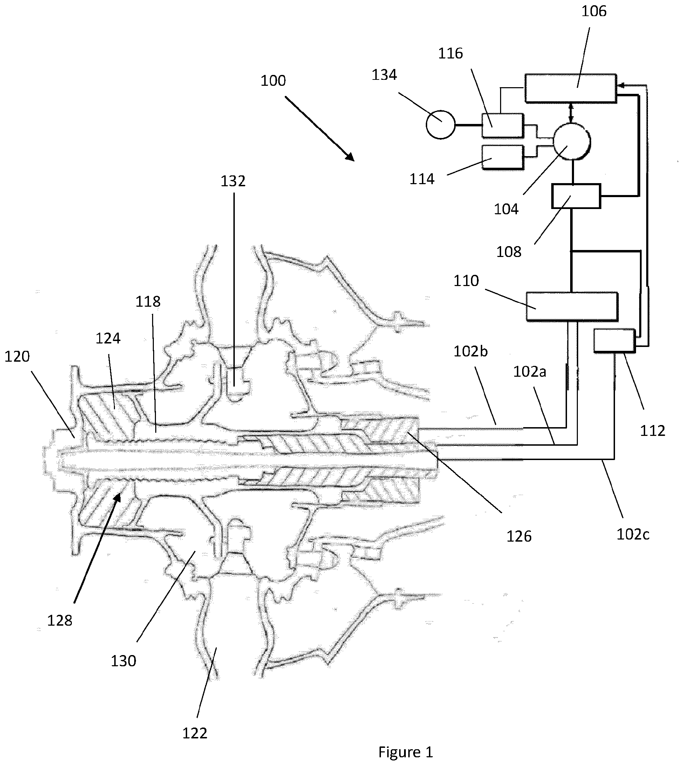

With reference to Figure 1, a pitch control system 100 comprises a plurality of pressure circuits 102a-102c, one or more pumps 104, and a controller 106. The one or more pumps 104 supply pressurised fluid (e.g. oil) to the plurality of pressure circuits 102a-102c via an anti-feathering valve 108 that controls the pressure of the fluid supplied to each of the plurality of pressure circuits 102a-102c. In some embodiments, the one or more pumps are mechanically driven by an aircraft engine or via a propeller gearbox. Alternatively, the one or more pumps may be electrically driven.

At least one of the pumps may be a hydraulic pump. The anti-feathering valve 108 may be a solenoid valve or a proportional direct drive valve. (A proportional direct drive valve is a known device that comprises a spool, driven by a motor, and a screw or nut assembly that transforms rotational motion into translational motion.)

The plurality of pressure circuits 102a-102c include a coarse pitch pressure circuit 102a, a fine pitch pressure circuit 102b, and a pitchlock pressure circuit 102c. As illustrated, a two-way electrohydraulic servo valve (EHSV) 110 is positioned with the anti-feathering valve 108 on one side and the coarse pitch pressure circuit 102a and fine pitch pressure circuit 102b on the other. The pitch control system 100 may optionally comprise a pitchlock valve 112 positioned between the one or more pumps 104 or the anti-feathering valve 108 and the pitchlock pressure circuit 102c. In alternative embodiments, the electrohydraulic servo valve (EHSV) 110 may be a proportional direct drive valve. The pitchlock valve 112 may be a two-position valve, e.g. a solenoid valve or a direct drive valve.

In Figure 1, the anti-feathering valve 108 is positioned between the one or more pumps 104 and the electrohydraulic servo valve (EHSV) 110. However, the anti-feathering valve 108 may instead be positioned after the electrohydraulic servo valve (EHSV) 110 or on a line parallel to the line between the one or more pumps 104 and the electrohydraulic servo valve (EHSV) 110.

The controller 106 is in direct communication with, and operates, the electrohydraulic servo valve 110, the anti-feathering valve 108 and, optionally, the pitchlock valve 112. The controller 106 may also be in communication with, and operate, the one or more pumps 104. A high pressure relief valve 114 and a feather solenoid valve 116 may be in communication with the one or more pumps 104. The controller 106 may also be in communication with, and operate, the feather solenoid valve 116.

As illustrated, the pitch control system 100 further comprises a pitch change actuator piston 118 surrounded by a dome 120. The pitch change actuator piston 118 is coupled to each of the propeller blades 122, via a yoke 130 and blade pins 132, and controls the pitch of the propeller blades 122. The pitch change actuator piston 118 is also coupled to a pitchlock mechanism 128 that prevents the pitch of the propeller blades 122 from decreasing in the event of one or more pump failures or in the event that the pitchlock valve 112 is commanded to reduce the pressure in the pitchlock pressure circuit 102c by the controller 106. The pitchlock mechanism 128 is that described in patent US 8,545,178. A description of the operation of the pitchlock mechanism 128 is hereby omitted.

A coarse pitch chamber 124 is provided on one side of the pitch change actuator piston 118 and a fine pitch chamber 126 is provided on the other side of the pitch change actuator piston 118. The pitch change actuator piston 118 controls the pitch of the propeller blades 122 by translating backwards and forwards with respect to the dome 120, the coarse pitch chamber 124 and the fine pitch chamber 126.The coarse pitch chamber 124 is pressurised with fluid via the coarse pitch pressure circuit 102a. In a similar manner, the fine pitch chamber 126 is pressured with fluid via the fine pitch pressure circuit 102b.

The controller 106 may comprise one or more sub-controllers. One or more of the one or more sub-controllers may control the pitch of the propeller blades 122. Additionally or alternatively, one or more of the one or more sub-controllers may monitor the status of the propeller.

During normal operation, the controller 106 operates the electrohydraulic servo valve (EHSV) 110 to adjust the pressure and the flow rate of the fluid supplied to the coarse pitch chamber 124 and the fine pitch chamber 126. For example, when it is desired to increase the pitch of the propeller blades 122, the controller 108 may operate the electrohydraulic servo valve (EHSV) 110 so as to increase the pressure of the fluid supplied to the coarse pitch chamber 124 and decrease the pressure of the fluid supplied to the fine pitch chamber 126. This causes the pressure within the coarse pitch chamber 124 to increase while the pressure within the fine pitch chamber 126 decreases. As a result of the modified pressure difference, the pitch change actuator piston 118 translates axially towards the fine pitch chamber 126 (to the right in the illustration), reducing the size of the fine pitch chamber 126 and causing the pitch of the propeller blades 122 to increase.

In the opposite case, when it is desired to decrease the pitch of the propeller blades 122, the controller 108 may operate the electrohydraulic servo valve (EHSV) 110 so as to decrease the pressure of the fluid supplied to the coarse pitch chamber 124 and increase the pressure of the fluid supplied to the fine pitch chamber 126. This causes the pressure within the fine pitch chamber 126 to increase while the pressure within the coarse pitch chamber 124 decreases. As a result of the modified pressure difference, the pitch change actuator piston 118 translates axially towards the coarse pitch chamber 124 (to the left in the illustration), reducing the size of the coarse pitch chamber 124 and causing the pitch of the propeller blades 122 to decrease.

In either of the above cases, the anti-feathering valve 108 does not allow the fluid supplied to the plurality of pressure circuits 102a-102c to drain, thereby maintaining the pressure in the pitch control system 100.

Feathering refers to the action of increasing the pitch of the propeller blades 122 so as to minimise a drag force on the propeller blades 122 and the windmilling speed of the propeller. This is beneficial during the entire flight and may even be critical during aircraft take-off and climb. It may be performed automatically by the controller 106 (known as an automatic feathering function).

When it is desired to feather the propeller blades 122, the controller 106 operates the feather solenoid valve 116 to drain the pressure of the fluid supplied to the fine pitch chamber 126, and simultaneously increase the pressure of the fluid supplied to the coarse pitch chamber 124 via the one or more pumps 104, and optionally via the backup pump 134. This is possible even when the propeller blades are pitchlocked because pitchlocking only prevents the pitch of the propeller blades 122 from decreasing - it does not prevent the pitch of the propeller blades 122 from increasing. In some embodiments, the pressure may also be increased using the electrohydraulic servo valve (EHSV) 110 as a back-up.

However, in some cases, the propeller blades 122 may feather when feathering is not desired. This may occur, for example, due to a fault in the controller 106. It may also occur due to, for example, an electrohydraulic servo valve (EHSV) hardover failure, a seal failure (such as a pitch change actuator piston seal failure), a full authority digital engine control (FADEC) hardover signal failure, *inter alia.*

In order to prevent undesired feathering, the pressure of the fluid supplied to each of the plurality of pressure circuits 1 02a-102c can be reduced simultaneously via the anti-feathering valve 108. Alternatively, the pressure of the fluid supplied to the coarse pitch pressure circuit 102a and the fine pitch pressure circuit 102b can be reduced via the anti-feathering valve 108 and the pressure of the fluid supplied to the pitchlock pressure circuit 102c can be reduced via the pitchlock valve 112. This causes the propeller blades 122 to pitchlock. It also ensures that the pressure within the coarse pitch chamber 124 cannot be increased, thereby preventing the pitch of the propeller blades 122 from increasing.

As such, the controller 106 is configured to detect undesired feathering of the propeller blades 122 and reduce the pressure of the fluid supplied to each of the plurality of pressure circuits 102a-1 02c when undesired feathering is detected so as to prevent feathering and simultaneously pitchlock the propeller blades 122. This can be done by operating the anti-feathering valve 108 to drain the fluid supplied to each of the plurality of pressure circuits 102a-102c, thereby reducing the pressure supplied to each of the plurality of pressure circuits 102a-102c. Alternatively, the anti-feathering valve 108 can be operated to drain the fluid supplied to the coarse pitch pressure circuit 102a and the fine pitch pressure circuit 102b, while the pitchlock valve 112 is operated to drain the fluid supplied to the pitchlock pressure circuit 102c.

The controller 106 may detect undesired feathering in several different ways. For example, the controller 106 may detect undesired feathering by determining whether the pitch of the propeller blades 122 is above a pitch threshold value. The pitch threshold value may be variable. For example, the pitch threshold value may be computed in real time by the controller 106 based on one or more parameters of the aircraft such as engine power, rotation rate (i.e. revolutions per minute (RPM)) of the propeller, aircraft speed, aircraft altitude, or air temperature, *inter alia.* In this way, the pitch threshold value can be maintained within a desired range (e.g. 10%) above the expected pitch for a given aircraft operating condition in order to minimize the reaction time of the pitch control system 100 and thereby reduce how much the pitch of the propeller blades 122 increases by. The desired range should be minimized while avoiding spurious triggering of the anti-feathering valve 108 and may be varied depending on the characteristics of the pitch control system 100.

Additionally, or alternatively, the controller 106 may detect undesired feathering by determining whether a rotation rate of the propeller is below a rotation threshold value. The rotation threshold value may be variable. For example, the rotation threshold value may be based on a percentage reduction of the rotation rate of the propeller when compared to a commanded rotation rate of the propeller. The percentage reduction may be between 1 to 50%. Preferably, the percentage reduction is between 5 to 10%. In this way, the rotation threshold value can be maintained within a desired range below the commanded rotation rate of the propeller for a given aircraft operating condition in order to minimize the reaction time of the pitch control system 100 and thereby reduce how much the pitch of the propeller blades 122 increases by.

In another case, the controller 106 may detect undesired feathering by determining whether a torque on the propeller is above a commanded torque. That is, whether the torque on the propeller has increased by more than 1 to 50%, more preferably by 5 to 10%, when compared to the commanded torque. This may be alterative to, or in addition to, the above methods of detecting undesired feathering. In order to make the pitch control system 100 more robust, the controller 106 may combine two or more of the above methods, i.e. using voting logic.

If the torque on the propeller is below the commanded torque and still above a torque threshold, the controller 106 may determine that there has not been a complete loss of engine capacity (i.e. one or more engines in the powerplant are still functioning) and may prevent automatic feathering of the propeller (known as auto-feather function muting). That is, the controller 106 may be configured to operate the anti-feathering valve 108 to drain the fluid supplied to the plurality of the pressure circuits 102a-102c so as to prevent feathering of the propeller blades 122. Alternatively, the controller 106 may be configured to operate the anti-feathering valve 108 to drain the fluid supplied to the coarse pitch pressure circuit 102a and the fine pitch pressure circuit 102b, and operate the pitchlock valve 112 to drain the fluid supplied to the pitchlock pressure circuit 102c.

The controller may also have internal logic that mutes the auto-feathering function and prevents activation of the feathering valve.

If the torque on the propeller is below a torque threshold value, the controller 106 may be configured to allow automatic feathering of the propeller. That is, the controller 106 may be configured to maintain the pressure of the fluid supplied to the plurality of the pressure circuits 102a-102c. The torque threshold value is less than the commanded torque and may be variable. For example, the torque threshold value may be determined based on the torque that can be provided by one or more functioning engines in the case of a partial engine failure. In this case, the engines cannot provide the commanded torque but can still provide some torque, maintaining some level of traction lower than that in normal operation but sufficient to guarantee safe continuation of the flight.

When the torque on the propeller is below the torque threshold value, this is an indication that all of the engines driving the propeller have failed. In this case, it is desirable to feather the propeller blades 122.

When the torque on the propeller is between the torque threshold value and the commanded torque, this is an indication that one or more engines driving the propeller have failed, but that one or more other engines driving the propeller are still functioning. In this case, it is not desirable to feather the propeller blades 122 so that the one or more other engines can continue to provide (reduced) thrust, and therefore control, to the propeller.

When undesired feathering is detected, the controller 106 may reduce the pressure of the fluid supplied to the plurality of pressure circuits 102a-102c to a non-zero value. That is, the controller 106 may reduce the pressure of the fluid supplied to the plurality of pressure circuits 102a-102c by 95% to 100%. Although reducing the pressure by 100% is preferable, it may be necessary to reduce the pressure by less than 100% (e.g. by 95%) in order to allow the system to readily return to normal operating conditions, i.e. so that the anti-feathering valve 108 can be reset to a normal operating position.

This being the case, in some embodiments, the controller 106 is configured to reduce the pressure of the pressurised fluid received by the coarse pitch pressure circuit 102b to a first threshold pressure. The first threshold pressure may be a pressure value that will not allow a pitch of the propeller blade to increase. That is, the first threshold pressure may be low enough to prevent the pitch control system 100 from developing a load that can overcome the net force on the propeller blade toward flat pitch, the net force resulting from G and aero forces on the propeller blade.

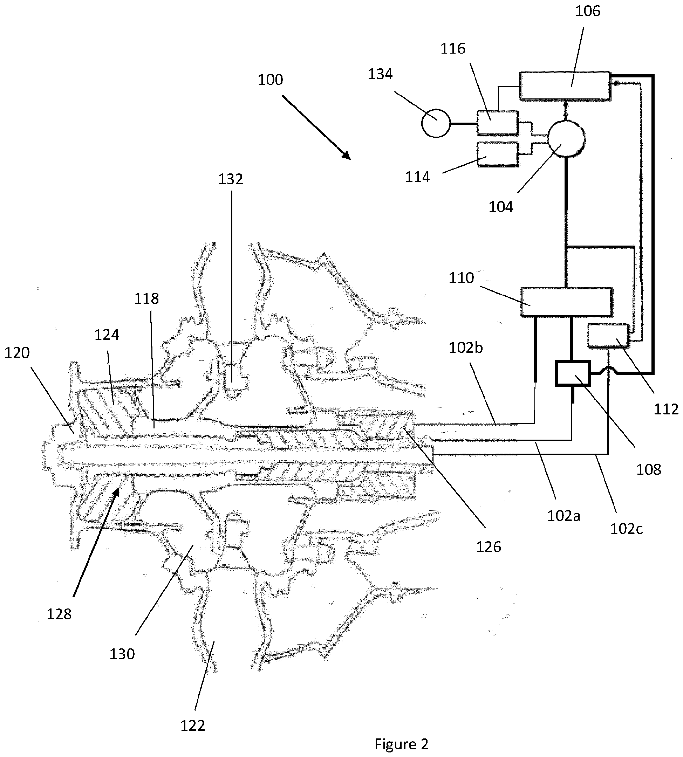

Figure 2 shows a schematic of an alternative pitch control system 100 where the anti-feathering valve 108 is positioned downstream of the electrohydraulic servo valve (EHSV) 110 (i.e. on the coarse pitch pressure circuit 102b), and where the pitchlock pressure circuit 102c receives pressurised fluid directly from the one or more pumps 104. In this case, when undesired feathering is detected, the controller 106 is configured to reduce the pressure of the fluid supplied to the coarse pitch pressure circuit 102a via the anti-feathering valve 108 and to simultaneously reduce the pressure of the fluid supplied to the pitchlock pressure circuit 102a via the pitchlock valve 112. The pressure of the fluid supplied to the fine pitch pressure circuit 102c remains unchanged.

In a similar manner to Figure 1, when undesired feathering is detected, the controller 106 may reduce the pressure of the fluid supplied to the coarse pitch pressure circuit 102a and the pitchlock pressure circuit 102c to a non-zero value in order to allow the system to readily return to normal operating conditions, i.e. so that the anti-feathering valve 108 and/or pitchlock valve 112 can be reset to a normal operating position. That is, the controller 106 may reduce the pressure of the fluid supplied to the coarse pitch pressure circuit 102a and the pitchlock pressure circuit 102c by 95% to 100%.

In another embodiment, the anti-feathering valve 108 is removed and the pitchlock valve 112 is modified to port the fluid supplied by the one or more pumps 104 to a drain. As above, the pressure of the fluid supplied by the one or more pumps 104 may be reduced by 95% to 100% in order to allow the system to return readily to operating conditions. The value of the reduced pressure may be below a pressure threshold value so that the total twisting movement (TTM) of the propeller blades 122 is not overcome. The total twisting movement (TTM) is a known parameter that comprises the sum of the aerodynamic twisting moment on the propeller blades 122 and the centrifugal twisting moment generated by an airfoil of the propeller blades 122.

As it will be appreciated, the controller 106 may only pitchlock the propeller blade and simultaneously reduce the pressure of the pressurised fluid received by the coarse pitch pressure circuit 102b to prevent feathering for some flight conditions, but not others. For example, the controller 106 may not prevent uncontrolled feathering in cruise where loss of one powerplant is not a critical event.

Various aspects of the pitch control system disclosed in the various embodiments may be used alone, in combination, or in a variety of arrangements not specifically discussed in the embodiments described in the foregoing and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from the invention in its broader aspects. The scope of the following claims should not be limited by the embodiments set forth in the examples, but should be given the broadest reasonable interpretation consistent with the description as a whole.

## Claims

1. A pitch control system comprising:
a coarse pitch pressure circuit configured to receive a pressurised fluid;
a pitchlock mechanism configured to pitchlock a propeller blade of a propeller; and
a controller configured to detect undesired feathering of the propeller blade;
wherein the controller is configured to, in response to detecting undesired feathering of the propeller blade, reduce the pressure of the pressurised fluid received by the coarse pitch pressure circuit so as to stop the propeller blade feathering and simultaneously cause the pitchlock mechanism to pitchlock the propeller blade.

2. A pitch control system as claimed in claim 1, comprising a pitchlock pressure circuit configured to receive a pressurised fluid.

3. A pitch control system as claimed in claim 2, wherein the controller is configured to pitchlock the propeller blade by reducing the pressure of the pressurised fluid received by the pitchlock pressure circuit.

4. A pitch control system as claimed in claim 3, comprising an anti-feathering valve, wherein the controller is configured to reduce the pressure of the pressurised fluid received by the coarse pitch pressure circuit and the pitchlock pressure circuit by operating the anti-feathering valve to port the pressurised fluid to a drain.

5. A pitch control system as claimed in claim 3, comprising a pitchlock valve, wherein the controller is configured to reduce the pressure of the pressurised fluid received by the coarse pitch pressure circuit and the pitchlock pressure circuit by operating the pitchlock valve to port the pressurised fluid to a drain.

6. A pitch control system as claimed in claim 3, comprising an anti-feathering valve and a pitchlock valve, wherein the controller is configured to reduce the pressure of the pressurised fluid received by the coarse pitch pressure circuit by operating an anti-feathering valve to port the pressurised fluid to a drain and reduce the pressure of the pressurised fluid received by the pitchlock pressure circuit by operating a pitchlock valve to port the pressurised fluid to a drain.

7. A pitch control system as claimed in any preceding claim, wherein the controller is configured to reduce the pressure of the pressurised fluid received by the coarse pitch pressure circuit to a first threshold pressure.

8. A pitch control system as claimed in any preceding claim, comprising a fine pitch pressure circuit configured to receive a pressurised fluid.

9. A pitch control system as claimed in any preceding claim, wherein the controller is configured to detect undesired feathering of the propeller blade by determining whether the propeller blade pitch is above a pitch threshold value.

10. A pitch control system as claimed in any preceding claim, wherein the controller is configured to detect undesired feathering of the propeller blade by determining whether a rotation rate of the propeller is below a rotation rate threshold value.

11. A pitch control system as claimed in any preceding claim, wherein the controller is configured to detect undesired feathering of the propeller blade by determining whether a torque on the propeller is above a commanded torque.

12. A pitch control system as claimed in claim 11, wherein the controller is configured to allow automatic feathering of the propeller blade when the torque to drive the propeller is below a torque threshold value.

13. A pitch control system as claimed in claim 12, wherein the controller is configured to prevent automatic feathering of the propeller blade when the torque on the propeller blade is below the commanded torque but above the torque threshold value.

14. A pitch control system as claimed in claim 13, wherein the torque threshold value is less than the commanded torque.

15. A method of operating a pitch control system having a coarse pitch pressure circuit configured to receive a pressurised fluid, the method comprising:
detecting undesired feathering of a propeller blade; and
in response to detecting undesired feathering of the propeller blade, pitchlocking the propeller blade and simultaneously reducing the pressure of the pressurised fluid received by the coarse pitch pressure circuit so as to stop the propeller feathering.
